(19) Europäisches Patentamt
European Patent Office
Office européen des brevets

(11) **EP 3 647 899 A1**

(12) **EUROPÄISCHE PATENTANMELDUNG**

(43) Veröffentlichungstag:
06.05.2020 Patentblatt 2020/19

(51) Int Cl.:
*G05D 7/06* (2006.01)

(21) Anmeldenummer: 18203215.1

(22) Anmeldetag: **29.10.2018**

(84) Benannte Vertragsstaaten:
**AL AT BE BG CH CY CZ DE DK EE ES FI FR GB GR HR HU IE IS IT LI LT LU LV MC MK MT NL NO PL PT RO RS SE SI SK SM TR**
Benannte Erstreckungsstaaten:
**BA ME**
Benannte Validierungsstaaten:
**KH MA MD TN**

(71) Anmelder: **Siemens Schweiz AG**
**8047 Zürich (CH)**

(72) Erfinder:
• **KUNZMANN, Rolf**
**76593 Gernsbach (DE)**

• **PETRY, Karl-Heinz**
**8864 Reichenburg (CH)**
• **HUBER, Wolfgang**
**6333 Hünenberg See (CH)**
• **HUWILER, Adrian**
**6038 Honau (CH)**

(74) Vertreter: **Maier, Daniel Oliver**
**Siemens AG**
**Postfach 22 16 34**
**80506 München (DE)**

(54) **VERFAHREN ZUM BETREIBEN EINES VENTILS, ZUGEHÖRIGE ELEKTRONISCHE ANSTEUEREINHEIT UND VENTILANTRIEB**

(57) Die Erfindung betrifft ein Verfahren zum Betreiben eines Ventils (100) mit einer elektronisch angesteuerten Antriebseinheit (102), enthaltend die Schritte:
- Ermitteln oder Vorgeben einer nichtlinearen Kennlinienfunktion (230), die einen geforderten Zusammenhang zwischen einer Ventilöffnungsposition und dem Durchfluss eines Fluids durch das Ventil (100) angibt,
- Hinterlegen der Kennlinienfunktion (203) in einer elektronischen Ansteuereinheit (104),
- Nutzen der hinterlegten Kennlinienfunktion (230) zur Einstellung der Ventilöffnungsposition (H) des Ventils (100) abhängig von einem Steuersignal (105), das einen Solldurchfluss (v) durch das Ventil (100) angibt.

Die Kennlinienfunktion (230) kann dabei mittels eines Parameterwertes (a), einer analytischen Funktion oder durch Interpolation mit vorgegebenen Stützwerten automatisch berechnet werden, der oder die von einem Verwender des Ventils (100) vorgegeben wird oder werden.

FIG 1

EP 3 647 899 A1

**Beschreibung**

Die vorliegende Erfindung betrifft ein Verfahren zum Betreiben eines Ventils mit einer elektronisch angesteuerten Antriebseinheit, bei dem eine nichtlineare Kennlinienfunktion vorgegeben wird, die einen geforderten Zusammenhang zwischen einer Ventilöffnungsposition und dem Durchfluss eines Fluids durch das Ventil angibt. Weiterhin wird die Kennlinienfunktion in einer elektronischen Ansteuereinheit des Ventils oder in einer zentralen bzw. übergeordneten Steuereinheit hinterlegt. Die hinterlegte Kennlinienfunktion wird zum Einstellen der Ventilöffnungsposition des Ventils abhängig von einem Steuersignal genutzt, das einen Solldurchfluss durch das Ventil angibt. Weiterhin betrifft die Erfindung eine elektronische Ansteuereinheit gemäß dem Oberbegriff des Anspruchs 12.

Die elektronische Ansteuereinheit kann z.B. ein Mikrocontroller oder Mikroprozessor sein.

Aus der Veröffentlichung der internationalen Patentanmeldung WO 2010/010092 A2 ist ein Verfahren für einen hydraulischen Abgleich und eine Regelung einer Heizungs- oder Kühlanlage sowie ein Abgleich- und Regelventil dafür bekannt.

Aus der deutschen Offenlegungsschrift DE 40 19 503 A1 ist eine Einrichtung zur Steuerung des Stellventiles einer Zentralheizungsanlage bekannt, die eine elektrisch steuerbare Stelleinrichtung zur Betätigung des Stellventiles sowie eine elektrische Steuereinrichtung zur Steuerung der Stelleinrichtung aufweist. Die Steuereinrichtung weist einen Speicher auf, in dem eine Ventilhub/Durchfluss-Korrekturkennlinie abgelegt ist. Die Steuereinrichtung steuert die Stelleinrichtung derart, dass die Stelleinrichtung den Ventilhub des Ventils im Sinne eines vorgegebenen Durchflusses einstellt.

Es ist Aufgabe der Erfindung, ein einfaches Verfahren zum Verwenden eines Ventils mit insbesondere einfach aufgebautem Ventilstößel und mit vorzugsweise wählbarer Kennlinie anzugeben. Insbesondere soll es möglich sein, einen Parameter mit Einfluss auf den gesamten Verlauf der Kennlinie zu berücksichtigen, wie es beispielsweise bei wärmetechnischen Lasten der Fall ist, insbesondere bei wärmetechnischen Lasten in Heizungs-/Kühlungstemperaturregelkreisen oder solchen Temperatursteuerstrecken.

Die voranstehende Aufgabe wird durch ein Verfahren zum Betreiben eines Ventils mit einer elektronisch angesteuerten Antriebseinheit mit den Merkmalen des unabhängigen Anspruchs 1 gelöst. Ferner wird die Aufgabe durch eine elektronische Ansteuereinheit mit den Merkmalen des nebengeordneten Anspruchs 12 gelöst. Weitere Merkmale und Details ergeben sich aus den Unteransprüchen, der Beschreibung und den Zeichnungen. Dabei gelten Merkmale und Details, die im Zusammenhang mit dem Verfahren beschrieben sind, selbstverständlich auch im Zusammenhang mit der elektronischen Ansteuereinheit und jeweils umgekehrt, sodass bezüglich der Offenbarung zu den einzelnen Aspekten stets wechselseitig Bezug genommen wird bzw. werden kann.

Gemäß einem ersten Aspekt wird ein Verfahren zum Betreiben eines Ventils, insbesondere mit elektronisch angesteuerter Antriebseinheit, angegeben, enthaltend die Schritte:

- Vorgeben einer nichtlinearen Kennlinienfunktion, die einen geforderten Zusammenhang zwischen einer Ventilöffnungsposition und dem Durchfluss eines Fluids durch das Ventil angibt,
- Hinterlegen der Kennlinienfunktion in einer elektronischen Ansteuereinheit, bspw. in einer Ansteuereinheit des Ventils oder in einer zentralen bzw. übergeordneten Steuereinheit/Regeleinheit einer solchen Ansteuereinheit,
- Nutzen der hinterlegten Kennlinienfunktion zur Einstellung der Ventilöffnungsposition des Ventils abhängig von einem Steuersignal, das einen Solldurchfluss durch das Ventil angibt.

Die Kennlinienfunktion wird mittels eines Parameterwertes automatisch berechnet, der von einem Verwender des Ventils vorgegeben wird. Alternativ kann der Verwender eine analytische Funktion oder Stützwerte vorgeben, aus denen durch Interpolation eine analytische Funktion ermittelt werden kann.

Der Verwender gibt somit nur den Parameterwert vor und braucht keine Kenntnisse der mathematischen Zusammenhänge zum Ermitteln der Kennlinie zu haben. Alternativ gibt der Verwender die analytische Funktion vor oder die Stützwerte. Hierfür sind einfache mathematische Kenntnisse ausreichend. Durch das Vorgeben des Parameters, der analytischen Funktion oder der Stützwerte ergeben sich neue Freiheitsgrade für das Festlegen von beliebig wählbaren Ventilkennlinien durch den Verwender.

Beim Vorgeben der analytischen Funktion durch den Verwender des Ventils kann dieser beispielsweise einzelne Funktionsterme der analytischen Funktion vorzugsweise nacheinander eingeben bzw. vorgeben, z.B. über eine entsprechende Benutzerschnittstelle, vorzugsweise eine mittels Software auf einer elektronischen Anzeigeeinheit realisierte Benutzerschnittstelle. Die Funktionsterme können insbesondere eine der mathematischen Grundoperationen enthalten, d.h. Plus, Minus, Multiplikation bzw. Division. Der Verwender könnte dann mindestens eines der folgenden Zeichen eingeben: +, -, * bzw. /. Die Funktionsterme können mit Hilfe von Klammersetzung eindeutig und korrekt eingegeben werden. So können runde Klammerpaare "(" und ")" bzw. eckige Klammerpaare "[", "]" durch den Verwender eingeben bzw. vorgegeben werden.

Bei der Vorgabe von Stützwerten, können die Stützwerte durch den Benutzer einzeln eingegeben werden, bspw. der Reihe nach, wobei nur ein jeweiliger y-Wert bzw. Funktionswert eingegeben wird. Alternativ können auch Stützwertpaare vorgegeben werden, die aus einem ersten Wert, z.B. x-Wert oder Definitionswert, und aus einem zweiten Wert bestehen, z.B. y-Wert oder Funktionswert. Zur Eingabe der Funktionswerte kann eine Benutzerschnittstelle vorgesehen sein, vorzugsweise eine mittels Software auf einer elektronischen Anzeigeeinheit realisierte Benutzerschnittstelle.

Das Vorgeben einer nichtlinearen Kennlinienfunktion ermöglicht es, dass das Ventil einfach aufgebaut sein kann und beispielsweise eine lineare oder annähernd lineare Kennlinie hat. Dennoch kann durch geeignete Vorgabe der nichtlinearen Kennlinienfunktion bei einer nichtlinearen Kennlinie einer Last, insbesondere einer wärmetechnischen Last, eine Gesamtkennlinie des Systems aus Last und Ventil linearisiert werden, was unten am Beispiel eines Wärmetauschers näher erläutert wird.

Die Kennlinienfunktion kann als Berechnungsvorschrift vorliegen oder als Wertefolge bzw. Wertetabelle, d.h. eine sogenannte "look up - Tabelle". Der gesamte Verlauf der Kennlinie wird von dem Parameter beeinflusst, den der Verwender vorgibt. Alternativ werden alle zu speichernden Werte der Kennlinienfunktion unter Nutzung des Parameters berechnet. Zwischenwerte lassen sich später über Splinefunktionen oder ähnliche Funktionen berechnen, im einfachsten Fall auch durch lineare Approximation.

Das Verfahren kann für einen Strang eines Regelungssystems bzw. Steuersystems durchgeführt werden, in welchem Ventil und Last in Reihe geschaltet sind. Gibt es mehrere Stränge, so kann das Verfahren für jeden relevanten Strang extra ausgeführt werden.

Das Fluid ist vorzugsweise eine Flüssigkeit, wie z.B. Wasser in einem Heizungskreis. Das Fluid kann aber auch ein Gas sein.

Der Parameterwert oder ein Parameterwert der analytischen Funktion oder ein Parameterwert, der zum Berechnen der Stützwerte verwendet wird, kann ein Kennwert zur mathematischen Modellierung einer Kennlinie sein, die unter Berücksichtigung einer Kennlinie für einen Wärmeaustauscher berechnet wird, wobei sich vorzugsweise die Kennlinie des Wärmeaustauschers mit demselben Parameterwert berechnen lässt. Die Kennlinie kann für den Wärmeaustauscher den Zusammenhang zwischen der Heizleistung oder der Kühlleistung und dem Durchfluss einer Flüssigkeit oder eines Gases durch den Wärmeaustauscher angeben.

Wärmeaustauscher sind oft spezifisch auf Kenngrößen nach Kundenwunsch ausgelegt. Der Parameterwert kann beispielsweise aus den Kenngrößen des Wärmeaustauschers berechnet werden, beispielsweise aus maximaler Leistung, Einlauftemperatur und Auslauftemperatur. Beispielsweise kann der Wärmeaustauscher nach dem Gegenstromprinzip oder nach dem Parallelstromprinzip arbeiten, was zu verschiedenen Kennlinien und damit zu voneinander verschiedenen Parameterwerten führt.

Die Berücksichtigung der Kennlinie der wärmetechnischen Last, d.h. bspw. des Wärmeaustauschers, ermöglicht es, ein sehr gutes Regelverhalten in einem Regelkreis zur Temperaturregelung einzustellen. Insbesondere kann dies durch eine Linearisierung der Gesamtkennlinie und/oder durch das Erzielen einer konstanten Kreisverstärkung erfolgen.

Die Kennlinienfunktion kann eine Umkehrfunktion sein, die aus einer Kennlinie für einen Wärmeaustauscher und einer Zielfunktion ermittelt wird. Die Kennlinie für den Wärmeaustauscher kann den Zusammenhang zwischen der Heizleistung oder der Kühlleistung und dem Durchfluss einer Flüssigkeit oder eines Gases durch den Wärmeaustauscher angeben. Die Zielfunktion kann den Zusammenhang zwischen der Heizleistung oder der Kühlleistung des Wärmeaustauschers abhängig von der Ventilöffnungsposition des Ventils angeben. So kann die Zielfunktion vorzugsweise eine lineare Funktion sein. Die Kennlinie für den Wärmeaustauscher kann mit demselben Parameterwert berechenbar sein, wie die vorgegebene oder ermittelte Kennlinienfunktion. Es kann ggf. auf die Berechnung der Kennlinie für den Wärmeaustauscher im Rahmen der Durchführung des Verfahrens verzichtet werden, weil diese Kennlinie implizit durch den Wärmeaustauscher realisiert wird und nur einmal bekannt sein muss, wenn die Umkehrfunktion festgelegt wird.

Somit ist die Umkehrfunktion eine gewünschte Ventil-Kennlinienfunktion, die durch die Abbildung von Stellgrößenwerten für das Ventil mittels einer elektronischen Ansteuereinheit für ein Ventil oder mittels einer zentralen Ansteuereinheit durchgeführt wird. Die lineare Zielfunktion ermöglicht eine einfache lineare Regelung mit beispielsweise gleichbleibender konstanter Regelverstärkung.

Das Ventil kann eine lineare mechanische Kennlinie haben, wobei das Ventil insbesondere ein Hubventil oder ein Schiebeventil mit einem geometrisch einfach aufgebauten Ventilstößel ist. Vorzugsweise ist das Ventil ein einfach aufgebautes Hubventil mit einem Ventilstößel in Form einer zylinderförmigen Schließscheibe, eines Schließzylinders oder eines Zylinders mit angesetztem kegelstumpfförmigen Schließabschnitt. Die mechanische Kennlinie ergibt sich bspw. dann, wenn die elektronische Ansteuereinheit keine hinterlegte Kennlinie berücksichtigen würde, die sich von einer durch die mechanische Bauform des Ventils vorgegebenen Kennlinie unterscheidet.

Beim Festlegen der Umkehrfunktion kann eine nichtlineare mechanische Kennlinie des Ventils berücksichtigt werden, wobei das Ventil insbesondere ein Kugelventil, eine Drosselklappe oder ein Drehhebeventil ist. Damit lässt sich auch für andere Ventilarten eine Linearisierung der Regelung beziehungsweise der Steuerung erreichen.

Die Kennlinienfunktion kann durch die folgende Berechnungsvorschrift vorgegeben sein:

$$v = q / (q+(1-q)/a),$$

- wobei q die normierte Kühlleistung oder Heizleistung des Wärmeaustauschers ist, vorzugsweise im Bereich von 0 bis 1 und vorzugsweise einheitenlos,
- wobei v der normierte Durchfluss durch das Ventil und durch den Wärmeaustauscher ist, vorzugsweise im Bereich von 0 bis 1 und vorzugsweise einheitenlos, und
- wobei a einen Kennwert für die Modellierung einer Kennlinie für einen bzw. für den Wärmeaustauscher angibt, der insbesondere durch die Eintrittstemperaturen und die Austrittstemperaturen der beiden Fluide, z.B. Wasser und Luft, ggf. auch Wasser und Wasser, festgelegt ist, das den Wärmeaustauscher durchströmt, wobei a vorzugsweise im Bereich von 0 bis 1 liegt und vorzugsweise einheitenlos ist.

Andere Kennlinienfunktionen mit abweichenden Berechnungsvorschriften können ebenfalls verwendet werden, insbesondere komplexere oder einfachere Funktionen. Anstelle des Wärmeaustauschers kann auf andere wärmetechnische Lasten oder auf andere technische Lasten Bezug genommen werden.

Das Ventil kann dem Wärmeaustauscher vorzugsweise vorgeschaltet oder nachgeschaltet sein.

Das Ventil kann ein stetig regelndes Regelventil sein, insbesondere in einem Temperaturregelkreis oder in einer Temperatursteuerstrecke. Das Ventil kann eine Magnetantriebseinheit, einen elektro-mechanische Antriebseinheit, eine elektrohydraulische bzw. hydraulische Antriebseinheit, eine elektropneumatische bzw. pneumatische Antriebseinheit oder eine andere Antriebseinheit enthalten. Die elektromechanische Antriebseinheit kann einen Stellmotor mit Getriebeeinheit enthalten. Eine elektronische Ansteuervorrichtung, insbesondere einer Magnetantriebseinheit, kann ein Stellsignal in ein Phasenschnitt-Leistungssignal umwandeln, das in einer Magnetspule der Magnetantriebseinheit ein Magnetfeld aufbaut, sodass sich eine zuverlässige Ansteuerung ergibt. Die Hubauflösung des Regelventils kann größer als 1:100, größer als 1:500 oder größer als 1:900 sein, was beispielsweise den Aufwand der Kennlinienanpassung durch resultierende sehr gute Regeleigenschaften rechtfertigt. Die Hubauflösung berechnet sich beispielsweise aus dem Verhältnis der kleinsten Hubänderung zu dem Gesamthub des Ventils bei einem Hubventil. Es können aber auch andere Ventilarten verwendet werden. Die Stellzeit des Ventils kann kleiner als 2 Sekunden oder kleiner als 1 Sekunde sein.

Die Kennlinienfunktion kann in einer elektronischen Vorrichtung hinterlegt werden, vorzugsweise in einer elektronischen Speichervorrichtung, insbesondere als Berechnungsvorschrift für ein automatisch ausgeführtes Programm oder als Wertetabelle, in der zu Durchflusswerten gehörende Ventilöffnungspositionen oder zu Ventilöffnungspositionen gehörende Durchflusswerte hinterlegt sind, insbesondere normierte Ventilöffnungspositionen und normierten Ventilöffnungspositionen.

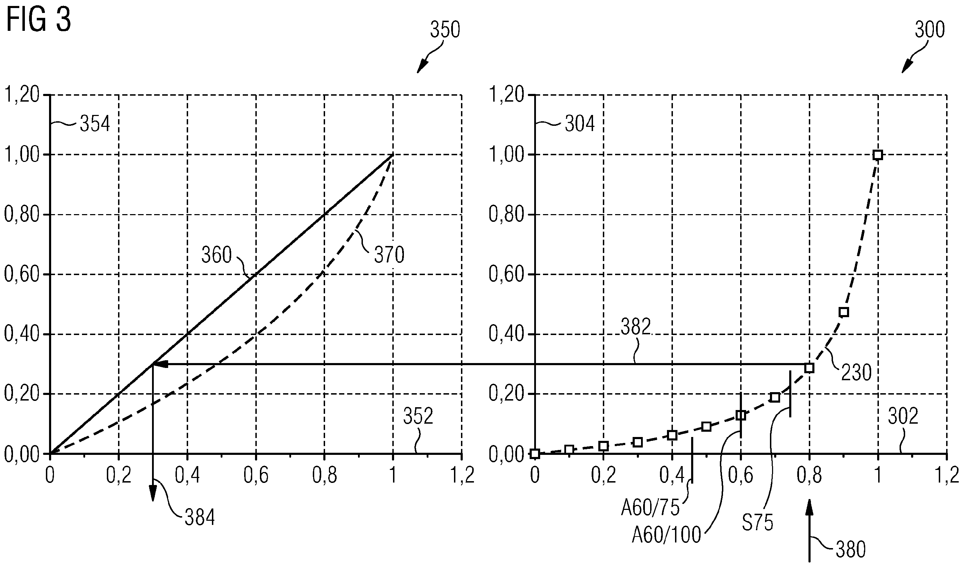

Die Kennlinie kann auch skaliert werden, wobei der von außen vorgegebene Arbeitsbereich des Ventils kleiner als 100 Prozent der möglichen Ventilöffnungsposition des Ventils sein kann, insbesondere kleiner als 75 Prozent oder kleiner als 50 Prozent sein kann. Der tatsächliche Ansteuerwert kann beispielsweise aus einem von außen vorgegebenen Ansteuerwert berechnet werden, indem ein Prozentsatz, der dem von außen vorgegebenen Ansteuerwert bezogen auf eine mechanisch mögliche maximale Ventilöffnungsposition entspricht, mit einem Prozentsatz multipliziert wird, der dem von außen vorgegebenen Ansteuerwert bezogen auf eine vorgegebene tatsächliche genutzte maximale Ventilöffnungsposition entspricht. Dies wird unten anhand der Figur 3 näher erläutert. Auf diese einfache Weise lässt sich der Dynamikbereich des Ventils und somit der Steuerung oder Regelung vergrößern.

Der Parameter kann von einem Verwender des Ventils vorgegeben werden, insbesondere unter Nutzung einer App, die mit einem Server kommuniziert. Der Parameter kann über einen Download der Firmware für eine elektronische Ansteuereinheit zur Ansteuerung einer Antriebseinheit des Ventils von dem Server zu der Ansteuereinheit übermittelt wird, vorzugsweise über ein Datenübertragungsnetz. Die Firmware ist dabei beispielsweise ein Programm, das für den Betrieb eines speziellen technischen Gerätes programmiert worden ist. Die Firmware steuert Ein- und Ausgabegeräte meist direkt an, d.h. ohne Verwendung eines Betriebssystems, das zur Ansteuerung der Hardware verschiedener Hersteller geeignet wäre. Alternativ wird eine andere Eingabemöglichkeit für den Parameter verwendet.

Das Verfahren kann für dasselbe Ventil pro Jahr oder pro Tag mindestens zwei Mal mit voneinander verschiedenen Parameterwerten durchgeführt werden, insbesondere automatisch. Beispielsweise kann ein Kühlen des Wärmeaustauschers im Sommer mit einem Parameter a1 berücksichtigt werden und ein Heizen des Wärmeaustauschers im Winter mit einem Parameter a2. Ebenso könnte eine Volllastheizung im Winter mit einem Parameter a1 und Teillastheizung in den Übergangszeiten mit einem Parameter a2 berücksichtigt werden. Jahreszeitliche Anpassungen und sogar tageszeitliche Anpassungen der Kennlinie des Ventils sind somit auf einfache Art möglich. Für die Anpassungen kann eine App verwendet werden. Alternativ erfolgt die Anpassung auf andere Art und Weise, beispielsweise durch Programmierung.

Die Vorgabe der Parameter kann auch von einer zentralen bzw. übergeordneten Steuereinheit aus erfolgen, die mehrere Ventile ansteuert. Mindestens eines der von dieser Steuereinheit angesteuerten Ventile kann nach dem oben erläuterten Verfahren mit automatischer Anpassung der Kennlinie arbeiten.

Gemäß einem zweiten Aspekt wird die Aufgabe durch eine elektronische Ansteuereinheit gelöst. Die elektronische Ansteuereinheit weist mindestens eine Speichereinheit auf, in der ein Programm mit Befehlen zur Ansteuerung mindestens eines Ventils gespeichert. Der mindestens eine Prozessor ist ausgebildet, das Programm aus der Speichereinheit zu laden und Befehle des Programms abzuarbeiten. Die Ansteuereinheit ist dabei ausgebildet, genau eine Antriebseinheit eines Ventils abhängig von einem Ansteuersignal anzusteuern. Alternativ kann die Ansteuereinheit dazu ausgebildet sein, als zentrale oder übergeordnete Ansteuereinheit mehrere Ventile mit Hilfe mehrerer Ansteuersignale anzusteuern. Die Ansteuereinheit kann für die Durchführung des Verfahrens gemäß des ersten Aspektes der Erfindung, insbesondere des Verfahrens nach einem der Ansprüche 1 bis 11 geeignet sein, insbesondere für das Verfahren nach Anspruch 10 oder 11. "Geeignet sein" heißt, dass Einheiten vorhanden sind, die die zugehörigen Verfahrensschritte durchführen.

Gemäß einem dritten Aspekt wird die Aufgabe durch einen Ventilantrieb gelöst. Der Ventilantrieb weist eine Antriebseinheit, insbesondere eine Magnetantriebseinheit, eine elektromechanische Antriebseinheit, eine elektrohydraulische Antriebseinheit oder eine pneumatische Antriebseinheit auf. Zudem weist der Ventilantrieb eine mit der Antriebseinheit signal- oder datentechnisch verbundene erfindungsgemäße Ansteuereinheit auf. Die Komponenten des erfindungsgemäßen Ventilantriebs können in einem gemeinsamen Gehäuse aufgenommen sein. Im Gehäuse des Ventilantriebs kann eine Strom- oder Spannungsversorgung zumindest zur elektrischen Speisung der erfindungsgemäßen Ansteuereinheit aufgenommen sein. Je nach Ausführung der Antriebseinheit kann im Gehäuse des Ventilantriebs die Strom- oder Spannungsversorgung, eine Hydraulikpumpe oder auch eine Pneumatikpumpe aufgenommen sein.

Sämtliche technische Wirkungen, die oben ausführlich in Bezug auf ein Verfahren gemäß dem ersten Aspekt der Erfindung beschrieben worden sind, können somit auch durch die Ansteuereinheit gemäß dem zweiten Aspekt der Erfindung bereitgestellt werden, in dem in der Ansteuereinheit ein Verfahren gemäß dem ersten Aspekt der Erfindung bzw. dessen Weiterbildungen ausgeführt wird. Selbiges trifft auf den Ventilantrieb gemäß dem dritten Aspekt der Erfindung zu, der eine erfindungsgemäße Ansteuereinheit umfasst.

In anderen Worten ausgedrückt, wird eine Ventilstößel-Optimierung mit in Firmware (FW) dynamisch festlegbarer V-Kennlinie bzw. Durchflusskennlinie angegeben. Aktuell wird die Hubventil-Kennlinie in Form von komplexen Stößel-Gebilden bestimmt. Die Entwicklung dieser Stößel gestaltet sich schwierig und die Herstellung ist sehr aufwändig. Da durch die Assemblierung des Ventils und des Stößels die Ventil-Kennlinie fix bestimmt wird, besteht keine Möglichkeit, diese nachträglich und ohne großen Aufwand verändern zu können. Die Ventilkennlinie wurde durch eine komplexe Form oder Bohrung im Stößel bestimmt.

Der Stößel kann bzw. muss nun kein komplexes Gebilde mehr sein, sondern beispielsweise ein einfach herstellbarer, flacher Zylinder-Stößel. Dieser Stößel kann nun unabhängig von der gewünschten Ventilkennlinie in allen Ventilen verwendet werden und kann mit einer Antriebseinheit mit geeigneter HubAuflösung kombiniert werden.

Es können nicht nur markant Kosten auf der Seite des Stößels, d.h. beispielsweise für Entwicklung und/oder Fertigung, eingespart werden, sondern auch die Ventilkennlinie kann in der installierten Basis beliebig angepasst und dynamisch verändert werden. Es besteht weiterhin die Möglichkeit zur Skalierung der Kennlinie bei einem Arbeitsbereich des Ventilhubes kleiner als 100 Prozent. Die dynamische Anpassung der Kennlinie kann über einen Download der Firmware oder auf andere geeignete Weise erfolgen.

Es kann somit ein geometrisch komplexer Schließkörper durch einen "simplen" Schließkörper ersetzt werden. Eine gewünschte Durchflusscharakteristik kann über eine Stützpunktinterpolation oder über mathematische Funktionen in der Ansteuereinheit als Teil eines Ventilantriebs bzw. Stellantrieb des Ventils erzeugt werden. Eine entsprechende Auflösung des Stellgerätes kann zweckmäßig sein.

Ein zusätzliches Merkmal könnte die Eingabe eines zu kompensierenden a-Wertes sein, d.h. beispielsweise einer Kenngröße für eine Wärmetauscher Kennlinie. Der Benutzer muss dann beispielsweise nicht erst eine Ventilkennlinie aus der Wärmetauscher-Kennlinie oder einer anderen Lastkennlinie ableiten und diese dann eingeben. Diese Arbeit kann vom Ventilantrieb bzw. vom Stellantrieb des Ventils übernommen werden.

Die mathematische Approximation der Wärmetauscher-Kennlinie kann wie folgt lauten:

$$q = v / (v + (1-v) * a),$$

mit q: relative Leistung (0...1),
v: relativer Durchfluss, und
a: Wärmetauscher Kennwert (über die Auslegungstemperaturen eindeutig bestimmt).

Die mathematische Approximation der Umkehrfunktion kann wie folgt sein:

$$v = q / (q + (1-q) / a),$$

mit q: relative Leistung (0...1),
v: relativer Durchfluss, und
a: Wärmetauscher Kennwert (über die Auslegungstemperaturen eindeutig bestimmt).

Das kann dann die Basis für die Korrektur der inhärenten internen Charakteristik der Regelung oder Steuerung sein, die dem Benutzer gar nicht bekannt sein muss.

Die Veränderung der Charakteristik, insbesondere der Ventil-Charakteristik, kann beispielsweise unter Nutzung des BacNet (**B**uilding **A**utomation and **C**ontrol **Net**works) Standards erfolgen, z.B. mit einer Mobile App.

Weitere Vorteile, technische Wirkungen, Merkmale und Einzelheiten der Erfindung und von Weiterbildungen ergeben sich aus der nachfolgenden Beschreibung, in der unter Bezugnahme auf die Zeichnung ein Ausführungsbeispiel der Erfindung im Einzelnen beschrieben ist. Es zeigt schematisch:

Figur 1    eine gebäudetechnische Infrastruktur,

Figur 2    eine Lastkennlinie, eine aus der Lastkennlinie ermittelte Ventilkennlinie und eine Gesamtkennlinie,

Figur 3    den Vorgang einer Abbildung einer externen Ventilstellgröße auf eine interne Ventilstellgröße sowie ein Beispiel für eine Skalierung, und

Figur 4    einen Ventileinsatz.

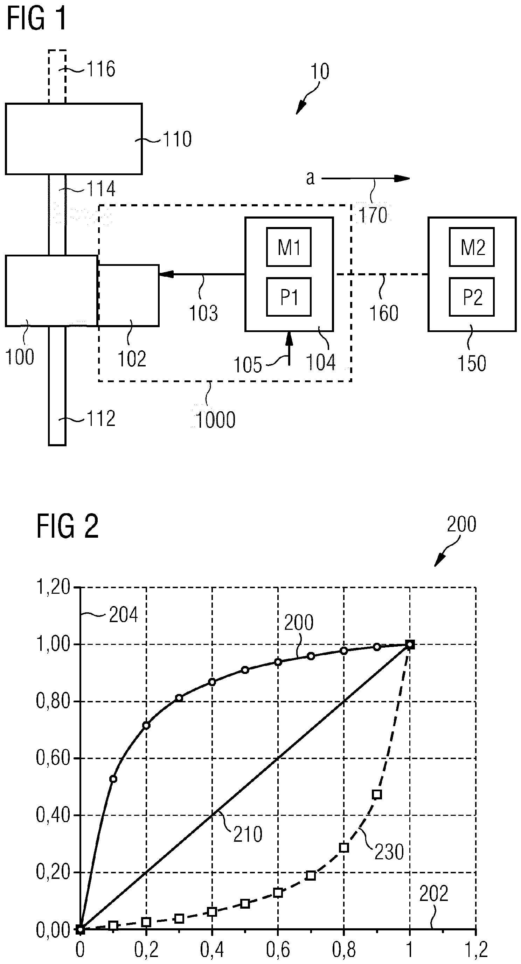

Die Figur 1 zeigt eine gebäudetechnische Infrastruktur 10, die folgende Einheiten enthält:

- ein Ventil 100,
- eine Antriebseinheit 102 des Ventils 100, beispielsweise eine Magnetantriebseinheit, eine elektromechanische Antriebseinheit, z.B. ein Motor mit Getriebeeinheit, oder eine elektrohydraulische Antriebseinheit,
- eine Ansteuereinheit 104, welche die Antriebseinheit 102 ansteuert, und
- einen Wärmeaustauscher 110, der mit dem Ventil 100 über Strangabschnitte 112 bis 116, beispielsweise über Heizungsrohre, in Reihe geschaltet ist.

Mit dem Bezugszeichen 1000 ist ein Ventilantrieb bezeichnet, welcher als Baueinheit zum Einstellen eines Ventilhubs am Ventil 100 anbringbar ist. Ein solcher Ventilantrieb 1000 kann auch als Stellantrieb bezeichnet werden. Ein derartiger Ventilantrieb 1000 umfasst vorzugsweise eine in einem Gehäuse aufgenommene Antriebseinheit 102 sowie eine signal- und/oder datentechnisch mit der Antriebseinheit 102 verbundene Ansteuereinheit 104. Im Gehäuse des Ventilantriebs 1000 kann zudem eine Strom- oder Spannungsversorgung zur energetischen Speisung der Antriebseinheit 102 aufgenommen sein.

Die Ansteuereinheit 104 erzeugt beispielsweise ein Phasenschnitt Leistungssignal 103 im Fall einer Magnetantriebseinheit 102. Alternativ kann ein anderes Ansteuersignal erzeugt werden.

Die Ansteuereinheit 104 erhält von einer übergeordneten Steuereinheit oder Regelungseinheit ein Steuersignal 105, das einen Stellwert für das Ventil 100 vorgibt. Das Steuersignal 105 ist beispielsweise ein Spannungssignal im Bereich von bspw. 0 Volt bis 10 Volt oder ein Stromsignal, bspw. im Bereich von 0 Milliampere bis 20 Milliampere. Die Bereiche können auch an einem anderen Wert als 0 Volt oder 0 Milliampere beginnen, bspw. bei 2 Volt oder bei 4 Milliampere. Die Ansteuereinheit 104 kann als reine Hardware beziehungsweise Schaltung realisiert werden. Alternativ kann die Ansteuereinheit 104 einen Datenspeicher M1 für Programmdaten und für Arbeitsdaten enthalten sowie einen Prozessor P1, der bei der Ausführung der unten erläuterten Verfahrensschritte Programmbefehle abarbeitet, die in dem Speicher M1 gespeichert sind.

Im Folgenden wird eine Ausführungsform erläutert, bei der das Verfahren mit Kennlinienvorgabe hauptsächlich in der Ansteuereinheit 104 durchgeführt wird. Alternativ kann das Verfahren aber auch in der übergeordneten Steuereinheit oder Regelungseinheit auf gleiche oder ähnliche Weise durchgeführt werden.

Zu der gebäudetechnischen Infrastruktur 10 gehört im weiteren Sinne auch ein Server 150, d.h. eine elektronische Datenverarbeitungsanlage, auf der mindestens ein Diensterbringungsprogramm gespeichert ist. Der Server 150 kann einen Datenspeicher M2 für Programmdaten und für Arbeitsdaten enthalten sowie einen Prozessor P2, der bei der Ausführung der unten erläuterten Verfahrensschritte Programmbefehle abarbeitet, die in dem Speicher M2 gespeichert sind. Der Server 150 kann alternativ auch nur mittels Hardware beziehungsweise Schaltungstechnik realisiert sein.

Die Ansteuereinheit 104 und der Server 150 können über ein Datenübertragungsnetz 160 in Verbindung stehen, bspw. über das Internet oder über ein Firmennetzwerk, das beispielsweise gemäß Internetprotokoll IP arbeitet.

Im Folgenden wird das Verfahren zum Betreiben des Ventils 100 näher erläutert. In der Ansteuereinheit 104 beziehungsweise alternativ in der übergeordneten Steuerung wird eine Umkehrfunktion hinterlegt, siehe Figur 2, Umkehrfunktion 230.

Wie durch einen Pfeil 170 dargestellt ist, kann ein Nutzer beziehungsweise Verwender des Ventils 100 einen Parameter a vorgeben, der unten noch näher erläutert wird. Die Vorgabe kann beispielsweise über ein Dienstnutzungsprogramm erfolgen, kurz App genannt, das mit einem entsprechenden Diensterbringungsprogramm auf dem Server 150 zusammenarbeitet. Beispielsweise kann der Parameter a über das Datenübertragungsnetz 160 oder ein anderes Datenübertragungsnetz zum Server 150 übertragen werden. Der Nutzer kann alternativ auch mehrere Parameter a1, a2 usw. vorgeben sowie ggf. auch Zeiten, zu denen diese Parameter jeweils zu nutzen sind, beispielsweise Monate, Tage oder sogar Stunden.

Anschließend wird der Parameter a in der Umkehrfunktion 230 berücksichtigt, beispielsweise durch Hinterlegung in einer Firmware über eine Berechnungsvorschrift für die Kennlinie 230 oder über die Hinterlegung von Werten, die nach der Berechnungsvorschrift unter Verwendung des Parameters a berechnet worden sind durch das Diensterbringungsprogramm oder durch ein anderes Programm, welchem der Parameter a von dem Diensterbringungsprogramm mit dem der Nutzer kommuniziert übermittelt worden ist.

Nach der Berücksichtigung des Parameters a in der Firmware, wird die Firmware in der Ansteuereinheit beispielsweise über einen Download aktualisiert. Alternativ kann der Parameter a auch direkt in die Ansteuereinheit 104 oder die übergeordnete Steuereinheit eingegeben werden. Die Firmware ist dann entsprechend angepasst und kann variable Parameter a selbst berücksichtigen. Alternativ kann die übergeordnete Steuerung die Firmware aktualisieren.

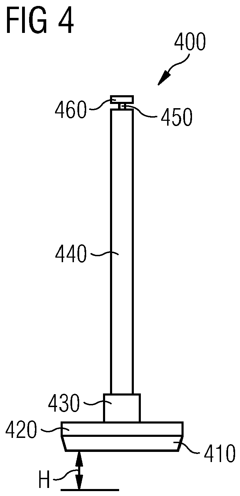

Danach werden die Infrastruktur 10 und insbesondere das Ventil 100 unter Nutzung der mit dem Parameter a berechneten Umkehrfunktion 230 betrieben, siehe Figur 2. Durch dieses Vorgehen kann ein einfach aufgebautes Ventil 100 verwendet werden, dessen Ventilstößel unten anhand der Figur 4 noch näher erläutert wird. Außerdem kann die im Folgenden anhand der Figur 2 erläuterte Linearisierung der Gesamtkennlinie des Systems aus Ventil 100 und Wärmeaustauscher 110 auf einfache Art verwirklicht werden.

An Stelle der Vorgabe des Parameters a kann auch die gesamte Lastkennlinie bzw. die Umkehrfunktion von einem Nutzer bzw. Verwender des Ventils 100 vorgegeben werden. Weiterhin alternativ können Stützwerte für diese Funktion bzw. für diese Funktionen von einem Nutzer bzw. Verwender des Ventils 100 vorgegeben werden, aus denen sich durch Interpolation dann die benötigte Funktion berechnen lässt bzw. die benötigten Funktionswerte berechnen lassen.

Die Figur 2 zeigt in einem Koordinatensystem 200 eine Lastkennlinie 220 für den Wärmeaustauscher 110, eine aus der Lastkennlinie 220 ermittelte Ventilkennlinie beziehungsweise Umkehrkennlinie 230 für das Ventil 100 und eine Gesamtkennlinie 210 für das Gesamtsystem aus Ventil 100 und Wärmeaustauscher 110.

Das Koordinatensystem 200 hat eine x-Achse 202, auf der für die Kennlinie 220 der Durchfluss durch den Wärmeaustauscher 110 normiert im Bereich von 0 bis 1 dargestellt ist. Für das Ventil 100 ist auf der x-Achse 202 der Hub normiert und im Bereich von 0 bis 1 dargestellt. Die Normierung kann auf Maximalwerte für den Hub, den Durchfluss bzw. die Leistung erfolgen.

Auf einer y-Achse 204 des Koordinatensystems 200 ist für den Wärmeaustauscher 110 die Wärmeaustauschleistung, beispielsweise eine Heizleistung oder eine Kühlleistung, wieder normiert und im Bereich von 0 bis 1 dargestellt. Für das Ventil ist auf der y-Achse 204 der Durchfluss dargestellt, insbesondere normiert und im Bereich von 0 bis 1. Auf Grund der Reihenschaltung von Ventil 100 und Wärmeaustauscher 110 ist der Durchfluss des Fluids, insbesondere von Wasser, durch beide Einheiten gleich, was die Darstellung in einem Koordinatensystem 200 sinnvoll macht.

Für die Gesamtkennlinie 210 des Gesamtsystems aus Ventil 100 und Wärmeaustauscher 110 bezeichnet die x-Achse den normierten Durchfluss durch das Ventil 100 beziehungsweise durch den Wärmeaustauscher 110 im Bereich von 0 bis 1 und die y-Achse die normierte Leistung des Wärmeaustauschers 110 im Bereich von 0 bis 1.

Die Umkehrfunktion 230 wird ausgehend von der Kennlinie 220 so festgelegt, dass sich eine lineare bzw. annähernd lineare Gesamtkennlinie 210 ergibt. Dies kann grafisch erfolgen, unter Verwendung von Berechnungsvorschriften bzw. Formeln, wie unten noch näher erläutert, oder auf andere geeignete Weise.

Die Kennlinie für den Wärmeaustauscher 220 wurde bspw. nach der folgenden Formel festgelegt:

$$q = v/(v+(1-v)*a)),$$

wobei q die normierte Kühlleistung oder Heizleistung des Wärmeaustauschers 110 ist, vorzugsweise im Bereich von 0 bis 1 und vorzugsweise einheitenlos,
wobei v der normierte Durchfluss durch das Ventil 100 und durch den Wärmeaustauscher 110 ist, vorzugsweise im Bereich von 0 bis 1 und vorzugsweise einheitenlos, und wobei a einen Kennwert für die Modellierung einer Kennlinie für den Wärmeaustauscher 110 angibt, der insbesondere durch die Eintrittstemperatur und die Austrittstemperatur eines Fluids festgelegt ist, das den Wärmeaustauscher 110 durchströmt, wobei a vorzugsweise im Bereich von 0 bis 1 liegt und vorzugsweise einheitenlos ist.

Die Umkehrfunktion 230 wird aus der Kennlinie 220 ermittelt, indem bei linearer Kennlinie des Ventils 100, d.h. Kennlinie ohne Vorgabe einer gesonderten Kennlinie für das Ventil 100, eine Spiegelung der Kennlinie 220 an der Zielkennlinie 210 durchgeführt wird, bspw. auf grafische Art und Weise oder durch Berechnung mit einem Mathematikprogramm.

Im Beispiel ergibt sich der Verlauf/die Kennlinie der Umkehrfunktion 230 bzw. die Kennlinienfunktion 230 durch:

$$v = q /(q+(1-q)/a)$$

wobei q die normierte Kühlleistung oder Heizleistung des Wärmeaustauschers 110 ist, vorzugsweise im Bereich von 0 bis 1 und vorzugsweise einheitenlos,
wobei v der normierte Durchfluss durch das Ventil 100 und durch den Wärmeaustauscher 110 ist, vorzugsweise im Bereich von 0 bis 1 und vorzugsweise einheitenlos, und wobei a einen Kennwert für die Modellierung einer Kennlinie für den Wärmeaustauscher 110 angibt, der insbesondere durch die Eintrittstemperatur und die Austrittstemperatur eines Fluids festgelegt ist, das den Wärmeaustauscher 110 durchströmt, wobei a vorzugsweise im Bereich von 0 bis 1 liegt und vorzugsweise einheitenlos ist.

Damit basieren beide Kennlinien 220 und 230 auf demselben Parameter a. Die Kennlinie 230 kann in der Firmware der Ansteuereinheit 104 für konkrete Parameter a oder als allgemeine Berechnungsvorschrift hinterlegt bzw. gespeichert werden.

Werden konkrete Werte aus den Kennlinien 230 und 220 ermittelt, so ergibt sich die Kennlinie 210. Bspw. gehört zu dem Hub 0,8 gemäß Kennlinie 230 ein Durchfluss durch das Ventil 100 von etwa 0,3 auf der y-Achse. Zu dem Durchfluss von 0,3 auf der x-Achse für den Wärmeaustauscher 110 ergibt sich mit der Kennlinie 220 eine Wärmeaustauscherleistung von etwa 0,8 auf der y-Achse. Damit gehört zu dem Hubwert 0,8 der Leistungswert 0,8 für die Gesamtkennlinie 210.

Beim Festlegen der Kennlinie 230 wurde eine lineare Kennlinie für das Ventil 100 vorausgesetzt. Es ist jedoch auch möglich, davon abweichende leicht nichtlineare bzw. stark nichtlineare Kennlinien von Ventilen bestimmter Bauformen zu berücksichtigen.

Die Figur 3 zeigt den Vorgang einer Abbildung einer externen Ventilstellgröße des Ventils 100 auf eine interne Ventilstellgröße sowie ein Beispiel für eine Skalierung. Ein Koordinatensystem 300 zeigt die Umkehrfunktion 230. Die x-Achse 302 des Koordinatensystems 300 bezeichnet für die Umkehrfunktion 230 den normierten Hub des Ventils 100 im Bereich von 0 bis 1. Die y-Achse 304 des Koordinatensystems 300 bezeichnet den normierten Durchfluss durch das Ventil 100 im Bereich von 0 bis 1. Die Normierung kann auf Maximalwerte für den Hub bzw. den Durchfluss erfolgen.

Links neben dem Koordinatensystem 300 ist ein Koordinatensystem 350 dargestellt, das die lineare Ventilkennlinie 360 des Ventils 100 zeigt, welche es durch seinen Aufbau bedingt hat, wenn die Ansteuereinheit und auch nicht die übergeordnete Einheit keine Korrekturen der Kennlinie vornehmen. Die Ventilkennlinie 360 des Ventils ist im Beispiel linear. Bei anderen Beispielen ist die Ventilkennlinie des Ventils 100 auch ohne Korrekturen nichtlinear, siehe bspw. Kennlinie 370. Die Kennlinie 370 wird dann an Stelle der Kennlinie 360 beim Festlegen der Umkehrfunktion derart berücksichtigt, dass die Zielfunktion 210, siehe Figur 2, wiederum linear ist oder einen anderen gewünschten oder geforderten Verlauf hat.

Die x-Achse 352 des Koordinatensystems 350 bezeichnet für die Ventilkennlinie 360 bzw. 370 den normierten Hub des Ventils 100 im Bereich von 0 bis 1. Die y-Achse 354 des Koordinatensystems 350 bezeichnet den normierten Durchfluss durch das Ventil 100 im Bereich von 0 bis 1. Die Normierung kann auf Maximalwerte für den Hub bzw. den Durchfluss erfolgen.

Die Ansteuereinheit 104 führt zum Verwirklichen der Kennlinie 230, d.h. der Umkehrfunktion, eine Abbildung bzw. ein Mapping von externen Stellwerten (Steuersignal 105) auf ventilinterne Stellwerte (Ansteuersignal 104) durch, was für einen Wert im Folgenden erläutert wird. Beträgt bspw. der normierte externe Stellwert (Steuersignal 105) für den Hub des Ventils 0,8, so ermittelt die Ansteuereinheit mit Hilfe der in der Ansteuereinheit 104 hinterlegten Kennlinie 230 den Durchflusswert von ca. 0,3, siehe Pfeil 380 und 382. Mit diesem Durchflusswert 0,3 ermittelt die Ansteuereinheit 104 dann aus Kennlinie 360 einen zugehörigen Hubwert des Ventils 100. Die Kennlinie 360 kann ebenfalls in der Ansteuereinheit hinterlegt sein. Aus der Kennlinie 360 folgt für einen Durchfluss von 0,3 ein Hub von ebenfalls 0,3, der dann als am Ventil 100 einzustellender Wert verwendet wird, d.h. in dem Signal 103 verwirklicht werden muss, siehe Pfeil 384. Bei einer linearen Kennlinie 360 kann die Ansteuereinheit den Durchflusswert auf der x-Achse 304 auch direkt als Wert für den Hub verwenden. Nur bei nicht linearer Ventilkennlinie 370 ist die Mappingfunktion mit Bezug auf das Koordinatensystem 350 auszuführen.

In der Figur 3 ist ein Beispiel für eine Skalierung eingezeichnet. Bei der Ventilkennlinie 230 beträgt in dem Strang 112 bis 116 der maximale Stellwert beispielsweise nur 75 Prozent, wofür das Bezugszeichen S75 verwendet wird. Ein von der externen Ansteuereinheit erzeugtes Ansteuersignal von 60 Prozent ergibt dann nicht eine Öffnung des Ventils entsprechend der Kennlinie an der Position A60/100, d.h. 60 Prozent, sondern der Durchflusswert ergibt sich an der Position A60/75, welche sich als 60 Prozent eines durch den maximalen Stellwert von 75 Prozent vorgegebenen Ansteuerbereichs ergibt, das heißt bei einem Positionssignal von 45 Prozent beziehungsweise von 60 Prozent mal 75 Prozent (0,45 = 0,6 * 0,75).

Das Mapping von Stellwerten und die Skalierung können auch in Kombination durchgeführt werden.

Die Figur 4 zeigt einen Ventileinsatz 400 des Ventils 100. Der Ventileinsatz 400 enthält in der folgenden Reihenfolge von unten nach oben:

- einen kegelstumpfförmigen Stößelabschnitt 410,
- einen zylinderförmigen Stößelabschnitt 420,
- einen Schaftansatz 430, dessen Durchmesser einen Wert hat, der kleiner als der Durchmesser des Stößelabschnitts 420 ist,
- einen im Vergleich zu dem Schaftansatz 430 und auch zum Stößelabschnitt 420 langgestreckten Schaft 440, dessen Durchmesser kleiner ist als der Durchmesser des Schaftansatzes 430,
- einen im Vergleich zu der Länge des Schaftes 440 kurzen Befestigungsabschnitt 450, dessen Durchmesser kleiner ist als der Durchmesser des Schaftes 440 und der bspw. zur Befestigung eines Ventilantriebs 1000 bzw. eines Stellantriebs des Ventils 100 und
- einen im Vergleich zu der Länge des Schaftes 440 kurzen Endabschnitt 460, dessen Durchmesser größer als der Durchmesser des Befestigungsabschnitts 450 ist.

Ein Ventilhub H liegt zwischen einer Öffnungs-

15    EP 3 647 899 A1    16

position des Bodens des kegelstumpfförmigen Stößelabschnitts 410 und einer nicht dargestellten Ventilöffnung des Ventils 100. Somit ist der Ventileinsatz 400 einfach aufgebaut und lässt sich kostengünstig herstellen. Der Ventileinsatz 400 ergibt ohne zusätzliche Maßnahmen eine lineare Kennlinie 360. Durch die Ansteuereinheit 104 oder durch eine übergeordnete Steuereinheit/Regeleinheit lässt sich aber jede Kennlinie mit dem Ventil 100 unter Verwendung des Ventileinsatzes 400 realisieren, wenn so vorgegangen wird, wie es oben erläutert worden ist.

Bezugszeichenliste

| | |
|---|---|
| 10 | gebäudetechnische Infrastruktur |
| 100 | Ventil |
| 102 | Antriebseinheit |
| 103 | Ansteuersignal |
| 104 | Ansteuereinheit |
| 105 | Steuersignal |
| 110 | Wärmeaustauscher |
| 112 bis 116 | Strangabschnitt |
| 150 | Server |
| 160 | Datenübertragungsnetz |
| 170 | Parameterübertragung |
| M1, M2 | Datenspeicher |
| P1, P2 | Prozessor |
| a | wärmetechnischer Parameter |
| 200, 300, 350 | Koordinatensystem |
| 202, 302, 352 | x-Achse |
| 204, 304, 354 | y-Achse |
| 210 | Gesamtkennlinie |
| 220 | Kennlinie für Wärmeaustauscher |
| 230 | Verlauf/Kennlinie der Umkehrfunktion |
| 360 | lineare Ventilkennlinie |
| 370 | nichtlineare Ventilkennlinie |
| 380 bis 384 | Pfeil für Werteabbildung |
| S75 | Stellwert |
| A60/100 | externer Stellwert |
| A75/100 | interner Stellwert |
| 400 | Ventileinsatz |
| 410 | kegelstumpfförmiger Stößelabschnitt |
| 420 | zylinderförmiger Stößelabschnitt |
| 430 | Schaftansatz |
| 440 | Schaft |
| 450 | Befestigungsabschnitt |
| 460 | Endabschnitt |
| 1000 | Ventilantrieb, Stellantrieb |
| H | Ventilhub |

**Patentansprüche**

1. Verfahren zum Betreiben eines Ventils (100), enthaltend die Schritte:

- Ermitteln oder Vorgeben einer nichtlinearen Kennlinienfunktion (230), die einen geforderten Zusammenhang zwischen einer Ventilöffnungsposition und dem Durchfluss eines Fluids durch das Ventil (100) angibt,
- Hinterlegen der Kennlinienfunktion (203) in einer elektronischen Ansteuereinheit (104),
- Nutzen der hinterlegten Kennlinienfunktion (230) zum Einstellen der Ventilöffnungsposition (H) des Ventils (100) abhängig von einem Steuersignal (105), das einen Solldurchfluss (v) durch das Ventil (100) angibt,

wobei die Kennlinienfunktion (230) mittels eines Parameterwertes (a), einer analytischen Funktion oder durch Interpolation mit vorgegebenen Stützwerten automatisch berechnet wird, der oder die von einem Verwender des Ventils (100) vorgegeben wird oder werden.

2. Verfahren nach Anspruch 1,
**dadurch gekennzeichnet,**

- **dass** der Parameterwert (a) oder ein Parameterwert der analytischen Funktion oder ein Parameterwert, der zum Berechnen der Stützwerte verwendet wird, ein Kennwert zur mathematischen Modellierung einer Kennlinie (230) ist, die unter Berücksichtigung einer Kennlinie (220) für einen Wärmeaustauscher (110) berechnet wird, wobei sich vorzugsweise die Kennlinie (230) des Wärmeaustauschers (110) mit demselben Parameterwert (a) berechnen lässt, und
- **dass** die Kennlinie (230) für den Wärmeaustauscher (110) den Zusammenhang zwischen der Heizleistung oder der Kühlleistung und dem Durchfluss einer Flüssigkeit oder eines Gases durch den Wärmeaustauscher (110) angibt.

3. Verfahren nach Anspruch 1 oder 2,
**dadurch gekennzeichnet,**
**dass** die Kennlinienfunktion (230) eine Umkehrfunktion (230) ist, die aus einer Kennlinie (220) für einen Wärmeaustauscher (110) und einer Zielfunktion (210) ermittelt wird,
wobei die Kennlinie (230) für den Wärmeaustauscher (110) den Zusammenhang zwischen der Heizleistung oder der Kühlleistung und dem Durchfluss einer Flüssigkeit oder eines Gases durch den Wärmeaustauscher (110) angibt,
wobei die Zielfunktion (210) den Zusammenhang zwischen der Heizleistung oder der Kühlleistung des Wärmeaustauschers (110) abhängig von der Ventilöffnungsposition (H) des Ventils (100) angibt,
und wobei die Zielfunktion (210) vorzugsweise linear ist, und wobei sich vorzugsweise die Kennlinie (220) für den Wärmeaustauscher (110) mit demselben Parameterwert (a) berechnen lässt, wie die vorgege-

9

bene oder ermittelte Kennlinienfunktion (230) .

4. Verfahren nach einem der vorhergehenden Ansprüche,
   **dadurch gekennzeichnet,**
   **dass** das Ventil (100) eine lineare mechanische Kennlinie hat, wobei das Ventil (100) insbesondere ein Hubventil (100) oder ein Schiebeventil mit einem geometrisch einfach aufgebauten Ventilstößel (410, 420) ist, vorzugsweise ein Hubventil (100) mit einem Ventilstößel in Form einer zylinderförmigen Schließscheibe, eines Schließzylinders oder eines Zylinders (420) mit angesetztem kegelstumpfförmigen Schließabschnitt (410) .

5. Verfahren nach einem der Ansprüche 1 bis 3,
   **dadurch gekennzeichnet,**
   **dass** beim Festlegen der Umkehrfunktion (230) eine nichtlineare mechanische Kennlinie des Ventils (100) berücksichtigt wird, wobei das Ventil (100) insbesondere ein Kugelventil, eine Drosselklappe oder ein Drehhebeventil ist.

6. Verfahren nach einem der vorhergehenden Ansprüche, insbesondere nach Anspruch 4,
   **dadurch gekennzeichnet,**
   **dass** die Kennlinienfunktion (230) vorgegeben ist durch:

$$v \; = \; q \; / \, (q + (1-q) \, / a)$$

   wobei q die normierte Kühlleistung oder Heizleistung des Wärmeaustauschers (110) ist, vorzugsweise im Bereich von 0 bis 1 und vorzugsweise einheitenlos,
   wobei v der normierte Durchfluss durch das Ventil (100) und
   durch den Wärmeaustauscher (110) ist, vorzugsweise im Bereich von 0 bis 1 und vorzugsweise einheitenlos, und
   wobei a einen Kennwert für die Modellierung einer Kennlinie für einen bzw. für den Wärmeaustauscher (110) angibt, der insbesondere durch die Eintrittstemperatur und die Austrittstemperatur eines Fluids festgelegt ist, das den Wärmeaustauscher (110) durchströmt, wobei a vorzugsweise im Bereich von 0 bis 1 liegt und vorzugsweise einheitenlos ist.

7. Verfahren nach einem der vorhergehenden Ansprüche,
   **dadurch gekennzeichnet,**
   **dass** das Ventil (100) ein stetig regelndes Regelventil (100) ist, insbesondere in einem Temperaturregelkreis oder in einer Temperatursteuerstrecke, insbesondere mit einer Magnetantriebseinheit (102), einer elektromechanischen Antriebseinheit (102) oder einer elektrohydraulischen Antriebseinheit (102) oder einer pneumatischen Antriebseinheit (102), wobei vorzugsweise bei einer Magnetantriebseinheit (102) eine elektronische Ansteuervorrichtung (102) ein Stellsignal in ein Phasenschnitt-Leistungssignal (103) umwandelt, das in einer Magnetspule der Antriebseinheit (102) ein Magnetfeld aufbaut, und
wobei vorzugsweise die Hubauflösung des Regelventils (100) größer als 1:100, größer als 1:500 oder größer als 1:900 ist.

8. Verfahren nach einem der vorhergehenden Ansprüche,
   **dadurch gekennzeichnet,**
   **dass** die Kennlinienfunktion (230) in einer elektronischen Vorrichtung (104) hinterlegt wird, vorzugsweise in einer elektronischen Speichervorrichtung (M1), insbesondere als Berechnungsvorschrift für ein automatisch ausgeführtes Programm (P1) oder als Wertetabelle, in der zu Durchflusswerten (v) gehörende Ventilöffnungspositionen (H) oder zu Ventilöffnungspositionen (H) gehörende Durchflusswerte (v) hinterlegt sind, insbesondere normierte Ventilöffnungspositionen (H) und normierten Ventilöffnungspositionen (H).

9. Verfahren nach einem der vorhergehenden Ansprüche,
   **dadurch gekennzeichnet,**
   **dass** die Kennlinie (230) skaliert wird, wobei der von außen vorgegebene Arbeitsbereich des Ventils (100) kleiner als 100 Prozent der möglichen Ventilöffnungsposition (H) des Ventils (100) ist, insbesondere kleiner als 75 Prozent oder kleiner als 50 Prozent,
   und wobei der tatsächliche Ansteuerwert aus einem von außen vorgegebenen Ansteuerwert (105) berechnet wird, indem ein Prozentsatz, der dem von außen vorgegebenen Ansteuerwert (105) bezogen auf eine mechanisch mögliche maximale Ventilöffnungsposition (S100) entspricht, mit einem Prozentsatz multipliziert wird, der dem von außen vorgegebenen Ansteuerwert (105) bezogen auf eine vorgegebene tatsächlich genutzte maximale Ventilöffnungsposition (S75) entspricht.

10. Verfahren nach einem der vorhergehenden Ansprüche,
    **dadurch gekennzeichnet,**
    **dass** der Parameter (a) von einem Verwender des Ventils (100) vorgegeben wird, insbesondere unter Nutzung einer App, die mit einem Server (150) kommuniziert,
    und **dass** der Parameter (a) über einen Download der Firmware einer elektronischen Ansteuereinheit (104) zur Ansteuerung einer Antriebseinheit (102) des Ventils (100) von dem Server (150) zu der Ansteuereinheit (104) übermittelt wird, vorzugsweise über ein Datenübertragungsnetz (160).

11. Verfahren nach einem der vorhergehenden Ansprüche,
    **dadurch gekennzeichnet,**
    **dass** das Verfahren vorzugsweise für dasselbe Ventil pro Jahr oder pro Tag mindestens zwei Mal mit voneinander verschiedenen Parameterwerten (a1, a2) durchgeführt wird, insbesondere automatisch.

12. Elektronische Ansteuereinheit (104), enthaltend:

    - mindestens eine Speichereinheit (M1), in der ein Programm mit Befehlen zur Ansteuerung mindestens eines Ventils (100) gespeichert ist,
    - mindestens einen Prozessor (P1), der ausgebildet ist, das Programm aus der Speichereinheit (M1) zu laden und Befehle des Programms abzuarbeiten,
    - wobei die Ansteuereinheit (104) ausgebildet ist, genau eine Antriebseinheit (102) eines Ventils (100) abhängig von einem Ansteuersignal (105) anzusteuern, oder wobei die Ansteuereinheit (104) ausgebildet ist, als zentrale oder übergeordnete Ansteuereinheit (104) mehrere Ventile (100) mit Hilfe mehrerer Ansteuersignale (105) anzusteuern,

    **dadurch gekennzeichnet,**
    **dass** die Ansteuereinheit (104) für die Durchführung des Verfahrens nach einem der vorhergehenden Ansprüche 1 bis 11 geeignet ist, insbesondere für das Verfahren nach Anspruch 10 oder 11.

13. Ventilantrieb (1000) zur Anbringung an einem Ventil (100) zum Einstellen eines Ventilhubs (H), welcher aufweist

    - eine Antriebseinheit (102), insbesondere eine Magnetantriebseinheit, eine elektromechanische Antriebseinheit, eine elektrohydraulische Antriebseinheit oder eine pneumatische Antriebseinheit, und
    - eine mit der Antriebseinheit (102) signal- oder datentechnisch verbundene Ansteuereinheit (104) nach Anspruch 12.

## FIG 1

## FIG 2

# FIG 3

EP 3 647 899 A1

# FIG 4

**Europäisches Patentamt**
**European Patent Office**
**Office européen des brevets**

# EUROPÄISCHER RECHERCHENBERICHT

**Nummer der Anmeldung**

EP 18 20 3215

## EINSCHLÄGIGE DOKUMENTE

| Kategorie | Kennzeichnung des Dokuments mit Angabe, soweit erforderlich, der maßgeblichen Teile | Betrifft Anspruch | KLASSIFIKATION DER ANMELDUNG (IPC) |
|---|---|---|---|
| X | US 2009/240376 A1 (ELSHAFEI MOUSTAFA [SA] ET AL) 24. September 2009 (2009-09-24) | 1,12,13 | INV.<br>G05D7/06 |
| Y | * das ganze Dokument * | 2 | |
| A | | 3-11 | |
| | ----- | | |
| X | EP 0 264 032 A2 (BOPP & REUTHER GMBH [DE]) 20. April 1988 (1988-04-20) | 1,12,13 | |
| Y | * Spalte 1, Zeile 34 - Zeile 47 * | 2 | |
| A | * Spalte 5, Zeile 15 - Zeile 45 * <br> * Ansprüche 1-13 * <br> * Abbildung 1 * | 3-11 | |
| | ----- | | |
| X | WO 95/06276 A1 (ROSEMOUNT INC [US]) 2. März 1995 (1995-03-02) | 1,2,12, 13 | |
| A | * Seite 3, Zeile 1 - Zeile 24 * <br> * Seite 13, Zeile 15 - Seite 14, Zeile 5 * <br> * Seite 15, Zeile 1 - Zeile 25 * <br> * Abbildungen 2-4 * | 3-11 | |
| | ----- | | |

**RECHERCHIERTE SACHGEBIETE (IPC)**

G05D

Der vorliegende Recherchenbericht wurde für alle Patentansprüche erstellt

| Recherchenort | Abschlußdatum der Recherche | Prüfer |
|---|---|---|
| München | 3. Mai 2019 | Pöllmann, H |

EPO FORM 1503 03.82 (P04C03)

## ANHANG ZUM EUROPÄISCHEN RECHERCHENBERICHT
## ÜBER DIE EUROPÄISCHE PATENTANMELDUNG NR.

EP 18 20 3215

In diesem Anhang sind die Mitglieder der Patentfamilien der im obengenannten europäischen Recherchenbericht angeführten Patentdokumente angegeben.
Die Angaben über die Familienmitglieder entsprechen dem Stand der Datei des Europäischen Patentamts am
Diese Angaben dienen nur zur Unterrichtung und erfolgen ohne Gewähr.

03-05-2019

| Im Recherchenbericht angeführtes Patentdokument | Datum der Veröffentlichung | Mitglied(er) der Patentfamilie | Datum der Veröffentlichung |
|---|---|---|---|
| US 2009240376 A1 | 24-09-2009 | KEINE | |
| EP 0264032 A2 | 20-04-1988 | DE 3633852 A1 | 07-04-1988 |
| | | EP 0264032 A2 | 20-04-1988 |
| WO 9506276 A1 | 02-03-1995 | BR 9407585 A | 07-01-1997 |
| | | CA 2166867 A1 | 02-03-1995 |
| | | CN 1129480 A | 21-08-1996 |
| | | DE 69427487 D1 | 19-07-2001 |
| | | DE 69427487 T2 | 25-04-2002 |
| | | DE 69432029 D1 | 20-02-2003 |
| | | DE 69432029 T2 | 20-11-2003 |
| | | EP 0739503 A1 | 30-10-1996 |
| | | EP 0957418 A2 | 17-11-1999 |
| | | JP 3595554 B2 | 02-12-2004 |
| | | JP H09502292 A | 04-03-1997 |
| | | SG 44472 A1 | 19-12-1997 |
| | | US 5549137 A | 27-08-1996 |
| | | US 5558115 A | 24-09-1996 |
| | | US 5573032 A | 12-11-1996 |
| | | WO 9506276 A1 | 02-03-1995 |

EPO FORM P0461

Für nähere Einzelheiten zu diesem Anhang : siehe Amtsblatt des Europäischen Patentamts, Nr.12/82

**IN DER BESCHREIBUNG AUFGEFÜHRTE DOKUMENTE**

*Diese Liste der vom Anmelder aufgeführten Dokumente wurde ausschließlich zur Information des Lesers aufgenommen und ist nicht Bestandteil des europäischen Patentdokumentes. Sie wurde mit größter Sorgfalt zusammengestellt; das EPA übernimmt jedoch keinerlei Haftung für etwaige Fehler oder Auslassungen.*

**In der Beschreibung aufgeführte Patentdokumente**

- WO 2010010092 A2
- DE 4019503 A1